(19) **Europäisches Patentamt / European Patent Office / Office européen des brevets**

(11) **EP 3 778 202 B1**

(12) **EUROPEAN PATENT SPECIFICATION**

(45) Date of publication and mention of the grant of the patent:
**25.12.2024 Bulletin 2024/52**

(51) International Patent Classification (IPC):
**B29C 70/46** (2006.01)   **B29C 70/18** (2006.01)
**B29C 70/68** (2006.01)   **C08J 5/04** (2006.01)
**B29C 33/56** (2006.01)

(21) Application number: **19776084.6**

(22) Date of filing: **27.03.2019**

(52) Cooperative Patent Classification (CPC):
**B29C 70/54; B29C 70/46; C08J 5/243; B29C 33/56; C08J 2363/00**

(86) International application number:
**PCT/JP2019/013215**

(87) International publication number:
**WO 2019/189369 (03.10.2019 Gazette 2019/40)**

(54) **FIBER-REINFORCED COMPOSITE MATERIAL MOLDING APPARATUS AND METHOD FOR MANUFACTURING FIBER-REINFORCED COMPOSITE MATERIAL MOLDED ARTICLE**

FORMVORRICHTUNG FÜR FASERVERSTÄRKTEN VERBUNDSTOFF UND VERFAHREN ZUR HERSTELLUNG EINES FORMARTIKELS AUS FASERVERSTÄRKTEM VERBUNDSTOFF

APPAREIL DE MOULAGE DE MATÉRIAU COMPOSITE RENFORCÉ PAR FIBRES ET PROCÉDÉ DE FABRICATION D'ARTICLE MOULÉ EN MATÉRIAU COMPOSITE RENFORCÉ PAR FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2018 JP 2018061742**

(43) Date of publication of application:
**17.02.2021 Bulletin 2021/07**

(73) Proprietor: **Mitsubishi Chemical Corporation**
**Chiyoda-ku**
**Tokyo 100-8251 (JP)**

(72) Inventors:
- **ICHINO Masahiro**
  **Tokyo 100-8251 (JP)**
- **TAKANO Tsuneo**
  **Tokyo 100-8251 (JP)**
- **ASADA Shirou**
  **Tokyo 100-8251 (JP)**

(74) Representative: **Hoffmann Eitle**
**Patent- und Rechtsanwälte PartmbB**
**Arabellastraße 30**
**81925 München (DE)**

(56) References cited:
JP-A- 2005 343 783    JP-A- 2006 327 103
JP-A- 2008 137 306    JP-A- 2016 090 281
JP-A- H0 524 059      JP-A- H08 300 361
JP-A- H11 170 382     US-A- 4 477 707
US-A- 5 902 512       US-A1- 2012 312 469

- **CHRISTOPHER RULISON: "So You Want to Measure Surface Energy?", TECHNICAL NOTE 3306, 30 June 1999 (1999-06-30), pages 1 - 16, XP002802439, Retrieved from the Internet <URL:http://www.surfchem.co.kr/newapplications/pdf/15.pdf> [retrieved on 20210318]**

**Description**

[Technical Field]

The present invention relates to a method for manufacturing a fiber-reinforced composite material molded article.

[Background Art]

As a fiber-reinforced composite material as an intermediate material for a lightweight and highly rigid fiber-reinforced composite material molded article, a prepreg obtained by impregnating continuous carbon fiber with a resin composition and a sheet molding compound (SMC) or stampable sheet obtained by impregnating a fiber base material composed of dispersed short carbon fiber with a resin composition are known.

As a method for manufacturing a fiber-reinforced composite material molded article, a method has been devised in which a plurality of prepregs is laminated and molded using an autoclave. In recent years, as an alternative to the molding method using an autoclave, a hot press molding method using a molding device including molds has been continuously developed.

As the molding device, a molding device is known which includes a molding die having a pair of lower and upper molds that form a cavity in a shape complementary to the shape of a molded article in a clamped state. In a state where the molds are opened, a plurality of prepregs is laminated on a molding surface of the lower mold, then a sheet molding compound (SMC) is optionally disposed thereon, the upper mold is lowered such that the molds are clamped, and heating and pressing are performed, thereby obtaining a fiber-reinforced composite material molded article (Patent Document 1).

Depending on the resin composition contained in the fiber-reinforced composite material, the molded article remains strongly adhering to the mold after molding. Therefore, generally, in order to promptly recover the molded article from the mold, the molding surface of the mold is subjected to a mold release treatment suited for the fiber-reinforced composite material. For example, a method of coating the molding surface of the mold with a general mold release agent is used. However, in a case where this method is used, unfortunately, the mold release agent moves to the molded surface, which leads to the deterioration of the appearance or quality of the molded article or leads to the deterioration of the adhesiveness between the molded article and an adhesive or a paint in a case where the adhesive or paint is applied to the molded article. In a case where a cleaning or polishing treatment is performed on the molded surface, the mold release agent having moved to the molded article can be removed, but the productivity is reduced. Furthermore, in a case where a decoration treatment such as embossing or surface texturing is performed on the molding surface, if a polishing treatment is performed on the molded surface after molding, the decorated surface is spoiled. Moreover, in the above method, the molding surface needs to be coated with the mold release agent whenever molding is performed, and thus the molding is paused whenever the coating is performed. In a case where the molding surface is unevenly coated with the mold release agent, the molded surface becomes uneven. As described so far, considering the work efficiency of molding and the stabilization of quality of the molded article, it cannot be said that the coating of the molding surface of the mold with a mold release agent is an effective method.

In order to enable a molded article to be released better from a mold, it is important to reduce the surface free energy of the molding surface. As treatments for reducing the surface free energy, a surface treatment using nickel plating containing a particulate polymer material such as polytetrafluoroethylene (PTFE) particles having low surface free energy (Patent Document 2), DLC coating using a mixture of fluorobenzene or benzene and fluorocarbon (Non-Patent Document 1 and Patent Document 3), and the like are known.

However, because a film formed of a polymer material such as PTFE exhibits low adhesion to an inorganic material, this film is easily peeled when used. Furthermore, because the hardness of the film is low, the film is scratched or worn away. For these reasons, the treatment using a polymer material is inappropriate for a molding die that has low durability, has a molding surface to which strong abrasion force is applied, and is used for performing press molding or pultrusion molding on a fiber-reinforced composite material. In addition, a fluorine-containing carbon film formed by DLC is thermally unstable. Therefore, it is difficult to use such a film in a mold which is exposed to a molding temperature higher than 100°C.

As a method for enabling a molded article to be released better from a mold, a method of adding an internal mold release agent to a fiber-reinforced composite material is also known (Patent Document 2). However, in a case where the mold release agent is added to the fiber-reinforced composite material, the curing properties and heat resistance of the resin composition deteriorate. Furthermore, in the fiber-reinforced composite material, the mold release agent acts at the interface between the reinforcing fiber and the resin composition, and hence the mechanical characteristics of the obtained molded article deteriorate.

Patent Document 4 describes an apparatus for curing resin impregnated fiber workpieces comprising an electrically conductive cavity for supporting standing electromagnetic waves, the cavity having apertures through which the workpiece is introduced and removed, together with the means for generating electromagnetic waves and means for coupling the electromagnetic wave generating means to the interior of the cavity.

Patent Document 5 concerns a resin molding die containing any of Ni, Fe, Cr and Zn characterized in that fluorine ions are injected into the cavities of the molds.

Non-Patent Document 2 describes surface energy theories used for testing solid surfaces and types of surfaces to which each theory can apply.

[Citation List]

[Patent Literature]

[Patent Document 1]
Japanese Unexamined Patent Application, First Publication No. 2002-086483
[Patent Document 2]
Japanese Patent No. 3189347
[Patent Document 3]
Japanese Patent Application No. 2006-033447
[Patent Document 4]
US 4,477,707 discloses the features of the preamble of claim 1.
[Patent Document 5]
JP H08 300361 A

[Non-Patent Literature]

[Non-Patent Document 1]
KUROKOUCHI Akio, WADA Kentaro, NISHIGUCHI Akira, FUJIWARA Shinji, KONNO Yoshinori, "Study on Improvement of Release Ability of Diamond-Like Carbon (DLC) Thin Films", Saitama Industrial Technology Center Research Report, Vol. 4 (2006)
[Non-Patent Document 2]
RULISON Christopher, "So you want to measure surface energy?", Technical Note 3306, 1999, pages 1-16.

[Summary of Invention]

[Technical Problem]

An object of the present invention is to provide a method for manufacturing a fiber-reinforced composite material molded article using a molding device which enables a molded article to be excellently released even though a mold release agent is not applied to a molding surface of a molding die or is not added to a fiber-reinforced composite material, has a region that is on the molding surface and exhibits excellent abrasion resistance by being treated to show mold release properties, and can suppress the deterioration of mold release properties.

[Solution to Problem]

The present invention is defined in the appended claims.

[Advantageous Effects of Invention]

According to the present invention, even though a mold release agent is not applied to a molding surface of a molding die or not added to a fiber-reinforced composite material, the molded article has excellent mold release properties, a region that is on the molding surface and treated to show mold release properties exhibits excellent abrasion resistance, and the deterioration of mold release properties can be suppressed.

[Brief Description of Drawings]

Fig. 1 is a cross-sectional view showing an example of a fiber-reinforced composite material molding device of the present invention.

Fig. 2A is a cross-sectional view showing another example of a molding die that is opened.

Fig. 2B is a cross-sectional view showing another example of the molding die that is clamped.

Fig. 3 is a cross-sectional view showing another example of the molding die.

Fig. 4A is a cross-sectional view showing another example of the molding die, in which a die body is illustrated.

Fig. 4B is a cross-sectional view showing another example of the molding die, in which split mold inserts are inserted into the mold insert-inserting portion of the die body.

[Description of Embodiments]

[Molding device]

The molding device used in the method of the present invention is a molding device including a molding die for obtaining a fiber-reinforced composite material molded article (hereinafter, also simply described as "molded article") by molding a fiber-reinforced composite material prepared by impregnating a reinforcing fiber base material with a resin composition as a matrix.

In the present invention, a surface free energy of a portion or the entirety of a molding surface of the molding die is equal to or lower than $25.0 \, mJ/m^2$. The surface free energy is measured by a three liquid method. A portion or the entirety of the molding surface of the molding die is an implanted surface into which either or both of fluorine and silicon are implanted. In a case where the above constitution is adopted, the molded article is excellently released from the molding die.

The molding surface in the present invention is a surface of the molding die that comes into contact with the fiber-reinforced composite material in the process of molding the molded article. The molding surface includes a cavity surface constituting a cavity formed in a case where the molds are brought close to each other, the surface of a core used as a molding die for manufacturing a hollow molded article, and the like.

In the molding device used in the method of the present invention, in view of making the molded article released better from the molding die, it is more preferable that the implanted surface is formed in at least the peripheral portion of the molding surface of the molding die. It is even more preferable that the entirety of the molding surface is the implanted surface.

In view of making the molded article excellently released from the molding die, a water contact angle in a portion or the entirety of the molding surface is preferably equal to or greater than 100°, and more preferably equal to or greater than 105°.

In view of making the molded article excellently released from the molding die, a diiodomethane contact angle in a portion or the entirety of the molding surface is preferably equal to or greater than 75°, and more preferably equal to or greater than 80°.

In view of making the molded article excellently released from the molding die, an ethylene glycol contact angle in a portion or the entirety of the molding surface is preferably equal to or greater than 85°, and more preferably equal to or greater than 90°.

The wettability of the implanted surface is quantitatively expressed by the contact angle of water, diiodomethane, and ethylene glycol. The contact angle is measured by a sessile drop method.

The surface free energy of a portion or the entirety of the molding surface is equal to or lower than $25.0 \, mJ/m^2$, and preferably equal to or lower than $20.0 \, mJ/m^2$. In a case where the surface free energy is equal to or lower than the upper limit described above, the molded article is excellently released from the molding die. The lower the surface free energy, the better. The surface free energy is substantially equal to or higher than $8.0 \, mJ/m^2$.

By the surface free energy, the wettability of the implanted surface that depends on the presence or absence of polarity is quantitatively expressed. The surface free energy is measured by a three liquid method. That is, the surface free energy is calculated based on the Kitazaki-Hata theory by using the contact angles measured using three kinds of probe liquids consisting of water, diiodomethane, and ethylene glycol.

The sum of a p component and an h component of the surface free energy of a portion or the entirety of the molding surface is preferably equal to or lower than $3.0 \, mJ/m^2$, and more preferably equal to or lower than $2.0 \, mJ/m^2$. In a case where the sum of the p component and the h component is equal to or lower than the upper limit described above, the molded article is released better from the molding die. The lower the sum of the p component and the h component, the better. The sum of the p component and the h component is substantially equal to or higher than $0 \, mJ/m^2$.

The wettability of the implanted surface for a polar liquid or the adhesion between the implanted surface and a cured product of the liquid cured in a state of coming into close contact with the implanted surface is expressed by the sum of the p component and the h component of the surface free energy. While the p component (polarity component) and the h component (hydrogen bonding component) are strongly correlated with the adhesion, a d component (dispersion component) of the surface free energy does not contribute much to the adhesion (Journal of the Adhesion Society of Japan, 18, 346, 1982, Sumiya et al., Japanese Journal of Polymer Science and Technology, 40, 65, 1983, Nakamae et al.).

A portion or the entirety of the molding surface that satisfies the conditions of the contact angle and surface free energy expresses sufficient mold release properties even in a case where the portion or the entirety of the molding surface is used in a state of coming into contact with an adhesive material or a pressure sensitive adhesive material, and the like.

On the other hand, in a case where the h component is equal to or higher than 0.4 mJ/m$^2$, the prepreg containing an epoxy-based resin or the like as a matrix and the molding die tend to be able to appropriately adhere to each other. Therefore, in a case where sheet wrap molding is performed to manufacture a hollow molded article, it is possible to improve the workability in the process of winding the prepreg around a core such as a mandrel. The h component is more preferably equal to or higher than 0.6 mJ/m$^2$, and even more preferably equal to or higher than 0.8 mJ/m$^2$.

Furthermore, the h component is preferably equal to or lower than 2.0 mJ/m$^2$, more preferably equal to or lower than 1.8 mJ/m$^2$, and even more preferably equal to or lower than 1.5 mJ/m$^2$, because then the adhesiveness and the aforementioned mold release properties tend to be balanced well.

The Vickers surface hardness of a portion or the entirety of the molding surface is preferably equal to or higher than 750 HV, more preferably equal to or higher than 800 HV, and even more preferably equal to or higher than 1,000 HV In a case where the Vickers surface hardness is equal to or higher than the lower limit described above, the implanted surface has excellent abrasion resistance. Therefore, scratching or peeling hardly occurs on the implanted surface even though particles or the like come into contact with the implanted surface, and it is easy to suppress the deterioration of mold release properties. The Vickers surface hardness equal to or higher than 750 HV is hardness equal to or higher than the hardness of hard chrome plating applied to a general metal surface.

In view of film-forming properties, film stability, peeling properties, durability, and the like, the Vickers surface hardness of a portion or the entirety of the molding surface is preferably equal to or lower than 5,000 HV, and more preferably equal to or lower than 3,000 HV

The abrasion resistance index of a portion or the entirety of the molding surface is preferably equal to or higher than 0.66, and more preferably equal to or higher than 0.75, because then the abrasion resistance is excellent and sufficient slidability is easily ensured. The higher the abrasion resistance index of a portion or the entirety of the molding surface, the better. Theoretically, the abrasion resistance index is equal to or lower than 1.

The abrasion resistance index of the molding surface is calculated from the following Equation 1 by the following abrasion resistance test.

(Abrasion resistance test)

Two square test plates (100 mm × 100 mm × 6 mm (thickness)) each having a surface X as one surface that is in the same state as the molding surface of the molding die are heated to 140°C, a 33 mm × 33 mm square probe intermediate material made of a fiber-reinforced composite material is heated and pressed for 5 minutes under a pressure of 80 MPa in a state where the probe intermediate material is interposed between the two test plates such that the surface X of each of the test plates comes into contact with the probe intermediate material. The heating and pressing test for the probe intermediate material is repeated 30 times in total, maximum flow lengths of four sides of the probe intermediate material are measured and averaged in the first and thirtieth heating and pressing tests, an average flow length obtained in the first heating and pressing test is denoted by F(1) (mm), and an average flow length obtained in the thirtieth heating and pressing test is denoted by F(30) (mm).

$$\text{Abrasion resistance index} = F(30)/F(1) \quad \text{(Equation 1)}$$

The surface free energy of a portion or the entirety of the molding surface of the molding die can be set to be equal to or lower than 25.0 mJ/m$^2$, for example, by methods such as a surface treatment in which fluorine is implanted into a chromium nitride film through a plasma booster sputtering (PBS) process (manufactured by TS Nanocoat corp.) (hereinafter, this treatment will be also described as "surface treatment A") and a surface treatment in which a hard ceramic nitride thin film is formed by CERTESS N-S (registered trademark) coating (manufactured by TS Nanocoat corp.) (hereinafter, this treatment will be also described as "surface treatment B").

By the surface treatment A and the surface treatment B, an implanted surface into which fluorine is implanted is formed. The implanted surface formed by the surface treatment A and the surface treatment B satisfies the conditions of the water contact angle equal to or greater than 100°, the diiodomethane contact angle equal to or greater than 75°, the ethylene glycol contact angle equal to or greater than 85°, the surface free energy equal to or lower than 25.0 mJ/m$^2$, the sum of the p component and the h component of the surface free energy equal to or lower than 3.0 mJ/m$^2$, and the Vickers surface hardness equal to or higher than 750 HV

The surface that will be formed on the molding surface of the molding die and has the surface free energy equal to or lower than 25.0 mJ/m$^2$ is not necessarily formed by the surface treatment A or the surface treatment B. For example, in a case where a portion or the entirety of the molding surface has a surface free energy equal to or lower than 25.0 mJ/m$^2$ due to the material of the molding die, the surface treatment does not need to be performed.

The base material of the molding die in the molding device is not particularly limited, and a mold used for general molding using a resin composition can be used. Examples of the base material of the molding die include iron, steel containing iron as a main component, aluminum, an alloy containing aluminum as a main component, a zinc alloy, a beryllium-copper alloy, and the like. Among these, steel is preferable. A molding die containing a resin material such as carbon fiber-reinforced composite material as a base material may also be used.

The molding die may be composed of a base material and a titanium or chromium-based film or the like having a thickness of several micrometers to tens of micrometers formed on the surface of the base material. In a case where such a film is formed, the wear of the molding die caused during molding by the reinforcing fiber contained in the fiber-reinforced composite material is suppressed, and the steel base material is inhibited from being destroyed by gas burning or corrosion.

A portion or the entirety of the molding surface may be optionally decorated.

Examples of embossing patterns formed by decoration include patterns of natural materials such as a wood grain pattern and leather-like emboss, a hairline pattern that looks like a processed metal, a textile pattern consisting of warp and weft of woven fabric, a lattice pattern, a stripe pattern, an abstract geometric pattern such as a polka dot pattern, and the like. Each of these patterns may be used singly, or a plurality of these patterns may be used in combination.

The decoration treatment method is not particularly limited, and examples thereof include an etching method by acid etching, a mechanical engraving method using a diamond stylus, a laser engraving method using a $CO_2$ laser or a YAG laser, a sandblast method, and the like.

The molding device used in the method of the present invention enables a molded article to be excellently released from the molding die. Accordingly, the molding surface of the molding die does not need to be coated with a mold release agent. Therefore, even though the molding surface is subjected to a decoration treatment such as embossing or surface texturing, the molded surface does not need to be subjected to a polishing treatment after molding. Consequently, the deterioration of the appearance of the molded article can be prevented.

The present invention defines a molding die for hot press molding including a pair of molds that form a cavity in a state where the molds are brought close to each other and clamped.

Hereinafter, examples of embodiments of the molding die and the molding device will be described based on drawings. The dimensions and the like in the drawings illustrated in the following description are merely examples, and the present invention is not limited thereto. The present invention can be embodied by appropriately modifying the dimensions and the like.

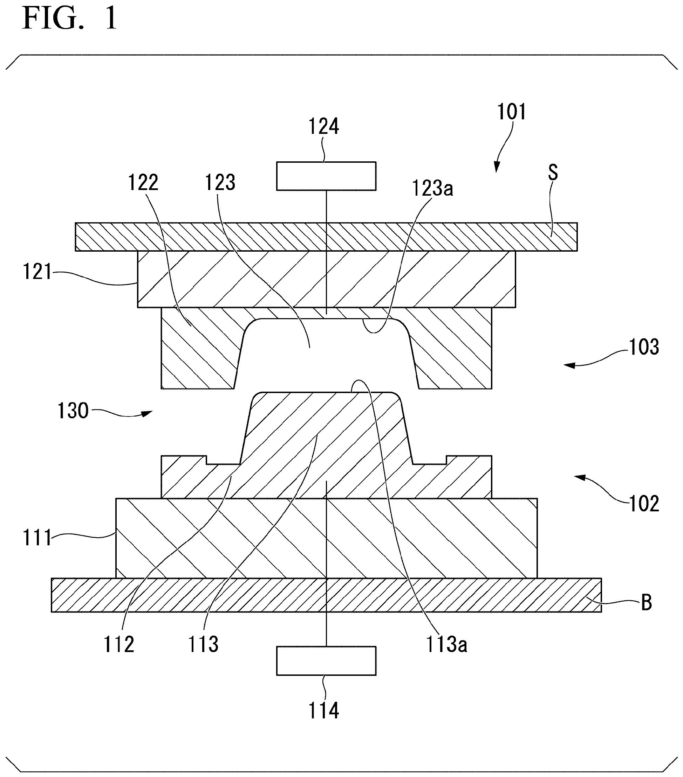

Examples of the molding device include a molding device 101 illustrated in Fig. 1.

The molding device 101 includes a pair of lower mold portion 102 and an upper mold portion 103.

The lower mold portion 102 includes a base mold 111 fixed on a bolster B, a mold 112 detachably mounted on the base mold 111, and a heat source 114 heating the mold 112. The mold 112 has a core 113 on the upper side, and the surface of the core 113 is a cavity surface (molding surface) 113a.

The upper mold portion 103 includes a base mold 121 fixed to a slide S that moves up and down, a mold 122 detachably mounted on the base mold 121, and a heat source 124 heating the mold 122. The mold 122 has a recess portion 123 formed on the lower side, and the surface of the recess portion 123 is a cavity surface (molding surface) 123a.

As described above, the molding device 101 includes the molding die 130 having the pair of molds 112 and 122. In a state where the molds are clamped, a cavity is formed between the core 113 of the mold 112 and the recess portion 123 of the mold 122. The pair of molds 112 and 122 are heated by the heat sources 114 and 124, a fiber-reinforced composite material is installed on the cavity surface 113a of the mold 112, and the molds are clamped, heated, and pressed, thereby obtaining a molded article.

In the molding device 101, the surface free energy of a portion or the entirety of the cavity surface 113a of the mold 112 and the cavity surface 123a of the mold 122 is equal to or lower than 25.0 mJ/m$^2$. Accordingly, the molded article is excellently released from the pair of molds 112 and 122. It is preferable that a portion or the entirety of the cavity surface 123a is used as an implanted surface.

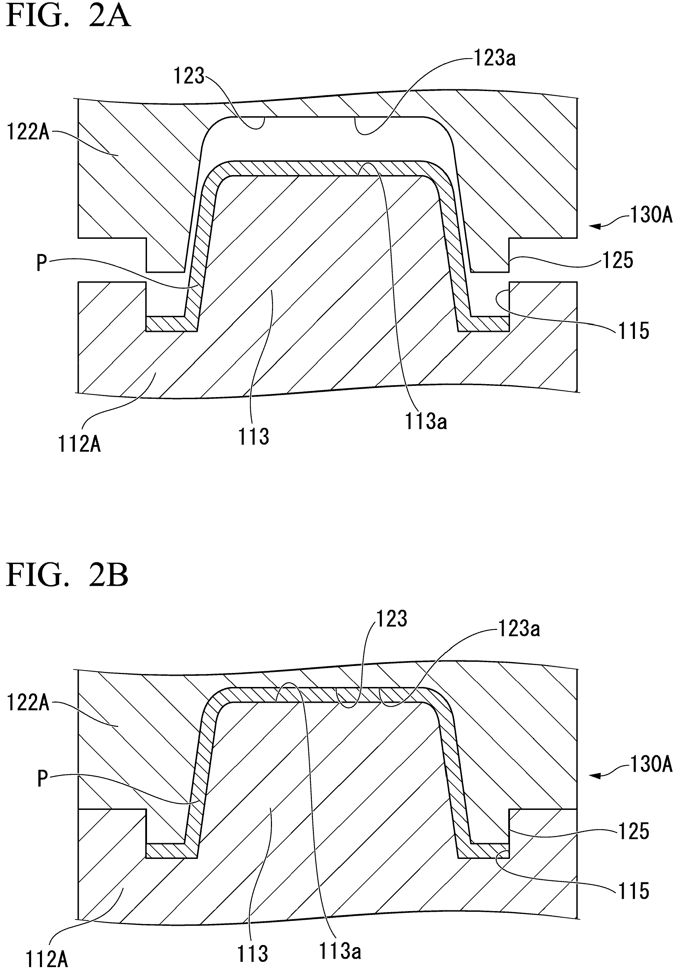

The molding die may be a molding die 130A illustrated in Figs. 2A and 2B.

The molding die 130A has a pair of molds 112A and 122A.

The molds 112A and 122A are the same as the molds 112 and 122 of the molding die 130, except that the molds 112A and 122A have a first shear edge portion 115 and a second shear edge portion 125 respectively that are on the periphery of the cavity and come into contact with each other such that the shear edge portions slide up and down on each other in a case where the molds are clamped.

Because the molding die 130A has the shear edge structure described above, the inside of the cavity remains airtight in a state where the molds are clamped. It is preferable that the molding die is a structure that enables the inside of the cavity to remain airtight in a state where the molds are clamped as described above. Herein, "remain airtight" means that even in a state where a fiber-reinforced composite material P enough for filling up the cavity is injected into the molding die and heated and pressed, the resin composition contained in the fiber-reinforced composite material P substantially does not leak from the molding die.

The structure enabling the inside of the cavity to remain airtight is not limited to the shear edge structure, and may be a molding die adopting a rubber seal structure in the portions of the pair of molds that come into contact with each other in a case where the molds are clamped.

In a case where air remains in the cavity of the molding die during molding, pinholes may occur on the molded surface, which leads to the occurrence of voids on the inside of the molded article. Therefore, particularly in a case where the molding die has a structure that enables the inside of the cavity to remain airtight, it is preferable to provide the molding die with a deaeration mechanism. In a case where the inside of the cavity is deaerated by the deaeration mechanism in a state where the cavity is filled up with the fiber-reinforced composite material, it is possible to effectively remove air remaining on the inside of the cavity.

Examples of the deaeration mechanism include a mechanism for releasing air out of a mold by forming an openable and closable deaeration hole in the mold (for example, PCT International Publication No. WO2004/048435), a mechanism for reducing pressure by connecting the aforementioned hole to a pump, and the like. In this case, the hole is opened until the cavity is filled up with the fiber-reinforced composite material, and while the material is being pressed, the cavity can be deaerated by closing the hole.

The molding die may be a molding die for in-mold coating having a paint injection path that is formed in one of the pair of molds and is connected to a paint injection port formed on the cavity surface.

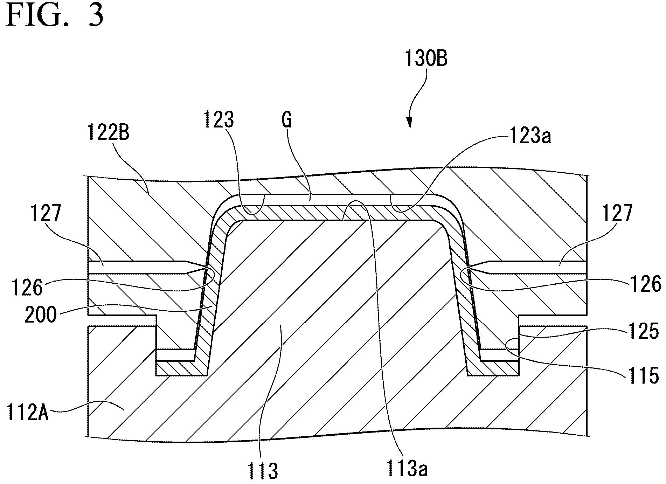

For example, the molding die may be a molding die 130B illustrated in Fig. 3. The molding die 130B is the same as the molding die 130A, except that the molding die 130B includes a mold 122B instead of the mold 122A on the upper side.

The mold 122B is the same as the mold 122A, except that the mold 122B has a paint injection path 127 that is connected to a paint injection port 126 formed on the cavity surface 123a.

In the molding die 130B, the molds 112A and 122B are separated after molding, and a paint is injected from the paint injection port 126 into a gap G generated between a molded article 200 in the cavity and the cavity surface 123a. Then, the molds are clamped again, and the paint is uniformly spread on the surface of the molded article 200 and cured by the heat of the molds 112A and 122B. In this way, a coating film can be formed on the surface of the molded article 200.

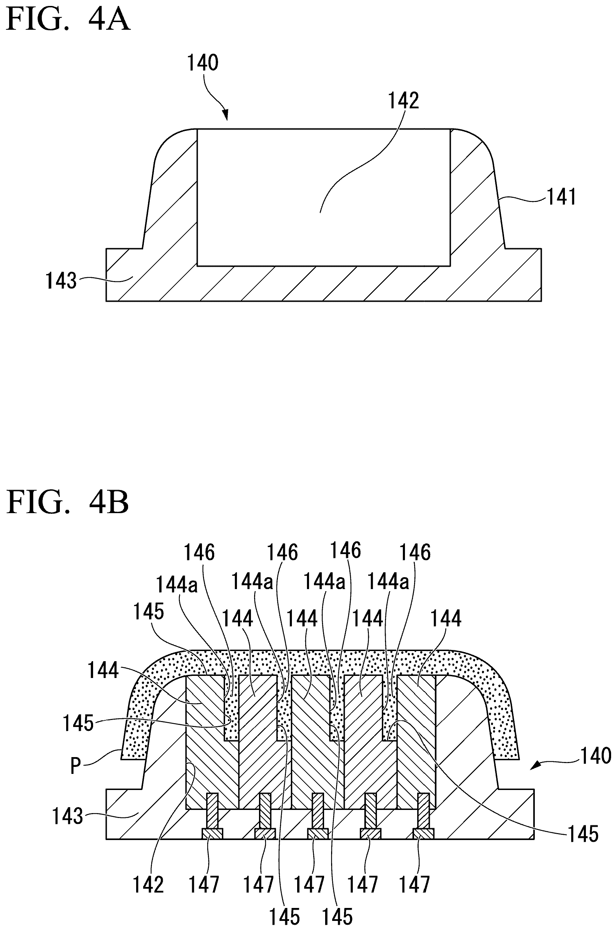

For hot press molding, it is preferable to use a molding die including a pair of molds, in which at least one of the pair of molds has a die body having a recessed mold insert-inserting portion and a plurality of split mold inserts inserted into the mold insert-inserting portion, and the surface of at least one of the split mold inserts is an implanted surface in a state where the plurality of split mold inserts is inserted into the mold insert-inserting portion. Examples of such a molding die include a molding die having a mold insert-type mold 140 illustrated in Figs. 4A and 4B instead of the mold 112 on the lower side.

The mold 140 includes a die body 143 in which a recessed mold insert-inserting portion 142 is formed on the upper surface of a core 141, and five split mold inserts 144 which are inserted into the mold insert-inserting portion 142. As shown in Fig. 4B, in a state where the five split mold inserts 144 are inserted into the mold insert-inserting portion 142, the upper surfaces of the split mold inserts 144 are cavity surfaces (molding surfaces) 145. Furthermore, the upper surface of at least one of the split mold inserts 144 is an implanted surface.

In a state of being inserted into the mold insert-inserting portion 142, the five split mold inserts 144 are fixed to the die body 143 by bolts 147.

In this example, streak-like notch portions 144a are formed on one side of the upper portion of four split mold inserts 144 among the five split mold inserts 144. As a result, in a state where the five split mold inserts 144 are inserted into the mold insert-inserting portion 142, by the split mold inserts 144, four recess portions 146 in the shape of grooves are formed on the cavity surfaces 145.

In a case where an implanted surface is formed on a cavity surface of a molding die not being a mold insert-type by a surface treatment, and the size of the molding die is increased to form a large molded article, the size of the surface treatment device also needs to be increased. Therefore, the size of the molding die is limited.

On the other hand, in a case where a molding die adopting a mold insert-type mold such as the mold 140 is used, it is possible to perform a surface treatment on each of the split mold inserts taken out of the mold insert-inserting portion. Therefore, the size of the molding die is not limited. Particularly, this molding die is effective for molding a large part such as a body frame of an automobile.

Just as in the mold 140, in the mold insert-type molding die, recess portion for forming undercuts, ribs, bosses, and the like can be simply formed on the cavity surface by adjusting the shape of the split mold inserts. In a case where the mold insert-type molding die is used, even deep and narrow recess portion can be formed simply. Furthermore, even though recess portion are formed on the cavity surface, a surface treatment can be simply performed on each of the split mold inserts, and the cavity surface inside of the recess portion can also be uniformly treated.

The mold insert-type molding die also has an advantage in that the shape of the molded article of interest can be easily changed by adjusting the shape of the split mold inserts. In addition, it is easy to optimize the material of the split mold inserts and the surface treatment according to the characteristics of the fiber-reinforced composite material.

For instance, even though repeated molding leads to problems such as the occurrence of depressions and cracks such as heat ticks on the cavity surface and the abrasion of a film, by repairing or replacing the split mold inserts, the molding operation can be easily continued.

The molding die and the molding device are not limited to those described above.

The molding die may include a mold release mechanism such as an ejector pin or an air valve such that the molded article can be easily taken out after molding. The molding die including the mold release mechanism is suitable for mass production because the molded article can be easily taken out without waiting for the molding die to cool.

In the molding die, an openable and closable resin injection port may be formed at a position where the resin composition can be injected into the cavity. In a case where the resin injection port is formed at such a position, it is possible to perform resin transfer molding (RTM). During RTM, in a state where a reinforcing fiber base material is disposed in the cavity and the molds are clamped, a resin composition is injected into the cavity from the aforementioned resin injection port such that a predetermined volume content of fiber is satisfied, and the material is molded.

[Method for manufacturing fiber-reinforced composite material molded article]

The method for manufacturing a molded article of the present invention is as defined in the claims and is a method for obtaining a molded article by molding a fiber-reinforced composite material by using the fiber-reinforced composite material molding device of the present invention, in which the fiber-reinforced composite material is prepared by impregnating a reinforcing fiber base material with a resin composition.

Examples of the fiber-reinforced composite material include a prepreg, SMC, and the like. Each of the prepreg and SMC may be used singly, or the prepreg and SMC may be used in combination.

Examples of the reinforcing fiber include carbon fiber, glass fiber, aramid fiber, high-strength polyester fiber, boron fiber, alumina fiber, silicon nitride fiber, nylon fiber, and the like. Among these, carbon fiber is preferable because the specific strength and specific elasticity thereof are excellent.

The resin composition is not limited to a thermosetting resin as long as it can be used for hot press molding, and may also include a thermoplastic resin.

Examples of the thermosetting resin include an epoxy resin, an unsaturated polyester resin, an acrylic resin, a methacrylic resin, a vinyl ester resin, a phenolic resin, a benzoxazine resin, a polyimide resin, and the like. Examples of the thermoplastic resin include a polyolefin-based resin, a polyamide-based resin, a polyester-based resin, a polyphenylene sulfide resin, a polyether ketone resin, a polyether sulfone resin, an aromatic polyamide resin, and the like. One kind of each of these resins may be used singly, or two or more kinds of these resins may be used in combination. Among these, a resin composition containing an epoxy resin is preferable because the hardness thereof after curing can be increased.

As described above, in the present invention, a molding device including a molding die is used, in which a surface free energy of a portion or the entirety of a molding surface of the molding die is equal to or lower than 25.0 mJ/m$^2$. Therefore, a molded article is excellently released from the molding die. As a result, the molded article can be promptly released from the molding die, and the molded article can be manufactured with high productivity. Furthermore, on the molding surface, a region treated to exhibit mold release properties has excellent abrasion resistance, and the deterioration of the mold release properties can be suppressed. Therefore, the molding device is effective for repeated molding.

In the present invention, even though a mold release agent is not applied to the molding surface of the molding die or not added to the fiber-reinforced composite material, the molded article is excellently released from the molding die. Therefore, the molded article obtained after molding does not need to be subjected to a treatment such as polishing or cleaning as a pretreatment for applying a paint or adhesive. As a result, the production costs can be reduced. In addition, even the molded surface that cannot be subjected to a polishing treatment after molding, such as a molded surface having a decorative pattern such as an embossed pattern or surface texture, can also be coated with a paint. Accordingly, a high value molded article can be manufactured with high productivity.

In a case where the aforementioned implanted surface is formed on the surface of a core such as a mandrel, the molding device is also applicable to sheet wrap molding in which a prepreg is wound around the core and molded by heating, and then the core is removed to manufacture a cylindrical molded article.

In this case, by using a prepreg having sufficient tackiness or adopting the aforementioned molding surface having an appropriate adhesiveness to a prepreg, the adhesiveness of the prepreg to the implanted surface can also be ensured. As a result, the workability in winding the prepreg and the mold release properties of the cylindrical molded article can be simultaneously satisfied.

Hereinafter, the present invention will be specifically described based on examples, but the present invention is not limited to the following description.

[Example 1]

The processed surface of a mirror-finished metal plate (SUS304, 100 mm × 100 mm × 6 mm (thickness)) was subjected to a surface treatment in which fluorine was implanted into a chromium nitride film by a plasma booster sputtering (PBS) process (manufactured by TS Nanocoat corp.) (surface treatment A1).

[Example 2]

The processed surface of a mirror-finished metal plate (SUS304, 100 mm × 100 mm × 6 mm (thickness)) was subjected to a surface treatment by CERTESS N-S (registered trademark) coating (manufactured by TS Nanocoat corp.) (surface treatment B).

[Example 3]

The processed surface of a mirror-finished metal plate (SUS304, 100 mm × 100 mm × 6 mm (thickness)) was subjected to a surface treatment in which fluorine was implanted into a chromium nitride film by a plasma booster sputtering (PBS) process (manufactured by TS Nanocoat corp.) (surface treatmentA2).

[Example 4]

The processed surface of a mirror-finished metal plate (SUS304, 100 mm × 100 mm × 6 mm (thickness)) was subjected to a surface treatment in which fluorine was implanted into a chromium nitride film by a plasma booster sputtering (PBS) process (manufactured by TS Nanocoat corp.) (surface treatmentA3).

[Comparative Example 1]

For comparison, a mirror-finished metal plate (SUS304, 100 mm × 100 mm × 6 mm (thickness)) was used for various tests without being subjected to a surface treatment for the processed surface thereof.

[Comparative Example 2]

The processed surface of a mirror-finished metal plate (SUS304, 100 mm × 100 mm × 6 mm (thickness)) was subjected to a surface treatment by CERTESS X (registered trademark) coating (manufactured by TS Nanocoat corp.) (hereinafter, the surface treatment will be also described as "surface treatment C").

[Contact angle and surface free energy]

The surface-treated metal plates of examples were used as samples. By a sessile drop method (droplet amount: 1 μL), a probe liquid droplet was attached to the surface (treated surface) of each sample, and a contact angle between the liquid droplet and the sample surface was measured. As probe liquids, water, diiodomethane, and ethylene glycol were used. For measuring the contact angle, "PCA-11" manufactured by Kyowa Interface Science. Inc was used as a contact angle analyzer, and "FAMS" software version: 5.0.10 manufactured by Kyowa Interface Science. Inc was used as attached analysis software. For one sample surface, the contact angle was measured 5 times, and the average thereof was calculated.

The surface free energy of the sample surface (treated surface) was calculated by a three liquid method. Specifically, the characteristic values of the aforementioned three probe liquids and the contact angles measured using the probe liquids were input into the analysis software, thereby calculating the surface free energy. The characteristic values of the probe liquids are shown in Table 1.

In measuring the contact angle and the surface free energy, the surface to be measured was thoroughly degreased and cleaned by being rubbed with waste cloth soaked in acetone.

[Table 1]

| | Surface free energy [mJ/m$^2$] | | | |
|---|---|---|---|---|
| Probe liquid | $\gamma^d$ | $\gamma^p$ | $\gamma^h$ | Total |
| Water | 29.1 | 1.3 | 42.4 | 72.8 |
| Diiodomethane | 46.8 | 4 | 0 | 50.8 |
| Ethylene glycol | 30.1 | 0 | 17.6 | 47.7 |

[Mold release properties and abrasion resistance index]

Five UD prepregs (TR368E250S, manufactured by Mitsubishi Chemical Corporation) obtained by impregnating a fiber base material composed of carbon fibers arranged in one direction with an epoxy resin composition were laminated in order such that the carbon fibers in the UD prepregs were oriented at angles of [0°/90°/0°/90°/0°] in plan view, thereby preparing a prepreg laminate constituted with fiver layers (fiber-reinforced composite material). The prepreg laminate was cut into a 33 mm × 33 mm square, thereby preparing a probe intermediate material.

As test plates, two metal plates obtained in each example were prepared. The test plates were preheated to 140°C, and the probe intermediate material was interposed between the two test plates such that the treated surfaces of the test plates came into contact with the probe intermediate material. Then, the resulting material was promptly installed in a press machine heated to 140°C, and heated and pressed for 5 minutes under a pressure of 80 MPa. Before the test plates and the cured product of the probe intermediate material were cooled, whether or not the cured product of the probe intermediate material was released from the test plates was checked. The evaluation standard of the mold release properties is as follows.

(Mold release properties)

Extremely excellent: No peeling operation was required to peel the cured product from the test plates after heating and pressing.

Excellent: It was easy to peel the cured product from the test plates after heating and pressing.

Poor: It was difficult to peel the cured product from the test plates after heating and pressing.

For the examples in which the mold release properties were extremely excellent or excellent, the heating and pressing test, in which the same two test plates as those described above were used and the probe intermediate material was interposed between the test plates and heated and pressed, was repeated 30 times in total under the same conditions as those described above. Whenever the heating and pressing test was performed once, whether or not the cured product of the probe intermediate material was released from the test plates was checked. For an example found to exhibit mold release properties even after the heating and pressing test was repeated 30 times, the mold release properties were evaluated as excellent. For an example found to lose mold release properties while the heating and pressing test was being repeated 30 times, the number of times of test performed until the mold release properties were lost was counted.

For the example found to exhibit mold release properties even after the heating and pressing test performed 30 times, maximum flow lengths of four sides of the probe intermediate material were measured and averaged in the first and thirtieth heating and pressing tests, an average flow length obtained in the first heating and pressing test was denoted by F(1) (mm), and an average flow length obtained in the thirtieth heating and pressing test was denoted by F(30) (mm). By using the obtained values of F(1) and F(30), the abrasion resistance index was calculated from the following Equation 1.

$$\text{Abrasion resistance index} = F(30)/F(1) \quad \text{(Equation 1)}$$

[Prepreg adhesiveness]

AUD prepreg (TR368E250S, manufactured by Mitsubishi Chemical Corporation) obtained by impregnating a fiber base material composed of carbon fibers arranged in one direction with an epoxy resin composition was cut into a 15 mm × 15 mm square, thereby preparing a prepreg for adhesiveness evaluation. As a test plate, one metal plate obtained in each example was prepared. The prepreg adhesiveness was evaluated by a series of operations performed in a thermostatic chamber at room temperature of 23°C and a humidity of 50%. The prepreg was left to stand without peeling off the cover film placed on the prepreg surface. At a point in time when the temperature of the prepreg became the same as room temperature, the cover film was peeled off such that the prepreg surface was exposed, and the prepreg was placed on the test plate such that the exposed surface faced the test plate. Then, in order to attach the prepreg to the test plate, a force of about 1 Kg/cm$^2$ was applied to the prepreg from above toward the test plate for 5 seconds. In order to peel off the prepreg pressed on the test plate, a pressure sensitive adhesive tape (CT405AP-15, adhesion: 3.93 N/10 mm, manufactured by NICHIBAN Co., Ltd.) cut in 15 mm (width) × 30 mm (approximate length) was attached to the prepreg such that the tape did not come into contact with the test plate. The rest of the tape was held by a hand, and the tape was pulled up at a speed of about 50 mm/sec. Based on the peel resistance exhibited at this time and the way the tape was peeled, the prepreg adhesiveness was evaluated. Each test plate was evaluated 5 times, and the prepreg adhesiveness was classified into the following four categories.

(A) Extremely excellent

The peel resistance is high, and the prepreg is peeled while being deformed as if turning over.

(B) Excellent

The peel resistance is about medium, and the entirety of the prepreg is peeled off at once.

(C) Practicable

Although the peel resistance is low, the prepreg does not immediately fall off even though the test plate on which the prepreg is pressed is caused to stand upright.

(D) Defective

The peel resistance is low, and the prepreg immediately falls off in a case where the test plate on which the prepreg is pressed is caused to stand upright.
Table 2 shows the measurement results of the contact angle of the treated surface of the metal plate of each example, and Table 3 shows the measurement results of the surface free energy of the same surface. Table 4 shows the measurement results of the prepreg adhesiveness of the treated surface of the metal plate of each example, and the evaluation results of the mold release properties and the abrasion resistance index.

[Table 2]

|  | Surface treatment | Contact angle [°] | | |
| --- | --- | --- | --- | --- |
|  |  | Water | Ethylene glycol | Diiodomethane |
| Example 1 | Surface treatment A1 | 113 | 98 | 90 |
| Example 2 | Surface treatment B | 108 | 93 | 84 |
| Example 3 | Surface treatment A2 | 108 | 88 | 92 |
| Example 4 | Surface treatment A3 | 108 | 88 | 92 |
| Comparative Example 1 | N/A | 79 | 58 | 48 |
| Comparative Example 2 | Surface treatment C | 86 | 64 | 50 |

[Table 3]

|  | Surface treatment | Surface free energy [mJ/m$^2$] | | | | |
| --- | --- | --- | --- | --- | --- | --- |
|  |  | d Component (dispersion component) | p Component (po arity component) | h Component (hydrogen bonding component) | p + h | Total |
| Example 1 | Surface treatment A1 | 14.2 | 1.4 | 0.2 | 1.6 | 15.8 |
| Example 2 | Surface treatment B | 11.8 | 0.8 | 0.2 | 1.0 | 12.8 |
| Example 3 | Surface treatment A2 | 13.2 | 0 | 0.9 | 0.9 | 14.1 |
| Example 4 | Surface treatment A3 | 12.9 | 0 | 0.9 | 0.9 | 13.8 |
| Comparative Example 1 | N/A | 29 | 7.8 | 2.9 | 10.7 | 39.7 |

(continued)

| | Surface treatment | Surface free energy [mJ/m²] | | | | |
|---|---|---|---|---|---|---|
| | | d Component (dispersion component) | p Component (po arity component) | h Component (hydrogen bonding component) | p + h | Total |
| Comparative Example 2 | Surface treatment C | 29.4 | 5.5 | 1.2 | 6.7 | 36.1 |

[Table 4]

| | Surface treatment | Mold release properties | F (1) | F (30) | Abrasion resistance index | Prepreg adhesiveness |
|---|---|---|---|---|---|---|
| Example 1 | Surface treatment A1 | Extremely excellent | 20.25 | 15.25 | 0.75 | C |
| Example 2 | Surface treatment B | Extremely excellent | 19.25 | 20.75 | 1.08 | B |
| Example 3 | Surface treatment A2 | Excellent | 17.75 | 16.60 | 0.90 | A |
| Example 4 | Surface treatment A3 | Excellent | 18.50 | 15.50 | 0.84 | A |
| Comparative Example 1 | N/A | Poor | - | - | - | A |
| Comparative Example 2 | Surface treatment C | Poor | - | - | - | A |

As shown in Examples 1 to 4 (Tables 2 to 4), by the surface treatment A1, A2, or A3 in which the chromium nitride film formed by the PBS process was doped with fluorine or the surface treatment B by CERTESS N-S (registered trademark) coating, an implanted surface (treated surface) was formed which had a surface free energy equal to or lower than 25.0 mJ/m² and into which fluorine or silicon was implanted. Furthermore, on the implanted surfaces (treated surfaces) of Examples 1 to 4, the water contact angle was equal to or greater than 100°, the diiodomethane contact angle was equal to or greater than 75°, the ethylene glycol contact angle was equal to or greater than 85°, and the sum of the p component and the h component of the surface free energy was equal to or lower than 3.0 mJ/m².

The implanted surfaces (treated surfaces) of Examples 1 to 4 were excellent in mold release properties and abrasion resistance. The mold release properties of Examples 1 to 4 were better than those of Comparative Examples 1 and 2. From this result, it has been revealed that the surface treatment A and the surface treatment B of the examples are effective as a surface treatment for making the cavity surface of the molding die into a surface excellent in mold release properties and abrasion resistance. Furthermore, the excellent mold release properties and abrasion resistance of the implanted surface have been found to be correlated with the contact angle of water, diiodomethane, and ethylene glycol, the surface free energy, and the sum of the p component and the h component of the surface free energy.

Furthermore, it has been revealed that the surface treatments A2 and A3 of Examples 3 and 4 tend to improve the prepreg adhesiveness.

Herein, by using an iron rod having undergone the surface treatment A2 in Example 3 as a mandrel (core), prepreg winding properties were evaluated under the following conditions.

As a result, even at a point in time when 10 seconds had elapsed after the prepreg was wound as in (3) described below, the prepreg was found to remain wound around the core without allowing the end thereto to rise. Therefore, it has been confirmed that the core is suitable for sheet wrap molding.

(Evaluation of prepreg winding properties)

(1) First, an iron rod with a round cross section having a diameter of about 10 mm and a length of 300 mm was subjected to the surface treatment A2, thereby preparing a core.

(2) Then, two UD prepregs (TR350H150S, manufactured by Mitsubishi Chemical Corporation) each having a length of 280 mm and a width of 30 mm were prepared in which carbon fibers were oriented to form angles of +45° and -45° with the longitudinal direction of the prepregs in plan view.

(3) Furthermore, in a thermostatic chamber at room temperature of 23°C and a humidity of 50%, the two UD prepregs at 23°C were rapidly wound around the core preheated to 30°C such that the carbon fibers were oriented to form an angle of [+45°/-45°] with the axial direction of the core.

The abrasion resistance index of Example 2 is slightly higher than "1" which is a theoretical upper limit. This results from a measurement error.

[Reference Signs List]

101 molding device
112,112Amold
113 core
113a cavity surface
122, 122A, 122B mold
123 recess portion
123a cavity surface
126 paint injection port
127 paint injection path
130, 130A, 130B, 140 mold
141 core
142 mold insert-inserting portion
143 die body
144 split mold insert
146 recess portion

**Claims**

1. A method for manufacturing a fiber-reinforced composite material molded article comprising:

   hot press molding, by using a molding die (130), a fiber-reinforced composite material comprising a reinforcing fiber base material impregnated with a resin composition,
   wherein the molding die (130) comprises a pair of molds (112, 122) that form a cavity in a state where the molds are brought close to each other and clamped, **characterized in that**
   a portion or the entirety of the molding surface (113a, 123a) is an implanted surface into which either or both of fluorine and silicon are implanted, and
   a surface free energy of the portion or the entirety of a molding surface (113a, 123a) of the molding die (130) is 25.0 $mJ/m^2$ or less which is measured by a three liquid method.

2. The method according to claim 1,
   wherein a sum of a p component and an h component of the surface free energy is 3.0 $mJ/m^2$ or less.

3. The method according to claim 1 or 2,
   wherein in a portion or the entirety of the molding surface (113a, 123a), a water contact angle is 100° or more, a diiodomethane contact angle is 75° or more, and an ethylene glycol contact angle is 85° or more.

4. The method according to any one of claims 1 to 3,
   wherein an h component of the surface free energy is 0.4 $mJ/m^2$ or more.

5. The method according to any one of claims 1 to 4,

   wherein at least one of the pair of molds (112, 122) comprises a die body (143) that has a recessed mold insert-inserting portion (142) and a plurality of split mold inserts (144) that is inserted into the mold insert-inserting portion (142), and

in a state where the plurality of split mold inserts (144) is inserted into the mold insert-inserting portion (142), surfaces of the plurality of split mold inserts (144) form the molding surface (145), and a surface of at least one of the split mold inserts (144) is an implanted surface into which either or both of fluorine and silicon are implanted.

6. The method according to claim 5,
wherein in a state where the plurality of split mold inserts (144) is inserted into the mold insert-inserting portion (142), a recess portion (146) is formed on the molding surface (145) by the plurality of split mold inserts (144).

7. The method according to any one of claims 1 to 6,
wherein the implanted surface comprises a chromium nitride film implanted with fluorine.

8. The method according to any one of claims 1 to 7,
wherein the implanted surface is formed in at least a peripheral portion of the molding surface.

9. The method according to any one of claims 1 to 8,
wherein a portion or the entirety of the molding surface is decorated.

10. The method according to claims 1 to 9,
wherein in a portion or the entirety of the molding surface, Vickers surface hardness is 750 HV or more.

11. The method according to any one of claims 1 to 10,
wherein the reinforcing fiber base material comprises a carbon fiber.

12. The method according to any one of claims 1 to 11,
wherein the resin composition comprises an epoxy resin.


**Patentansprüche**

1. Verfahren zur Herstellung eines Formartikels aus faserverstärktem Verbundmaterial, umfassend:

Warmformpressen eines faserverstärkten Verbundmaterials, das ein mit einer Harzzusammensetzung imprägniertes Verstärkungsfaserbasismaterial umfasst, unter Verwendung einer Formmatrize (130), wobei die Formmatrize (130) ein Formpaar (112, 122) umfasst, die einen Hohlraum in einem Zustand bilden, in dem die Formen nah aneinander gebracht und eingespannt werden, **dadurch gekennzeichnet, dass** ein Teil oder die gesamte Formoberfläche (113a, 123a) eine implantierte Oberfläche ist, in die eines oder beide von Fluor und Silicium implantiert ist, und eine freie Oberflächenenergie des Teils oder der gesamten Formoberfläche (113a, 123a) der Formmatrize (130) 25,0 mJ/m$^2$ oder weniger beträgt, was durch ein Drei-Flüssigkeiten-Verfahren gemessen wird.

2. Verfahren gemäß Anspruch 1,
wobei eine Summe einer p-Komponente und einer h-Komponente der freien Oberflächenenergie 3,0 mJ/m$^2$ oder weniger beträgt.

3. Verfahren gemäß Anspruch 1 oder 2,
wobei für einen Teil oder die gesamte Formoberfläche (113a, 123a) ein Wasserkontaktwinkel 100° oder mehr beträgt, ein Diiodmethankontaktwinkel 75° oder mehr und ein Ethylenglykolkontaktwinkel 85° oder mehr beträgt.

4. Verfahren gemäß einem der Ansprüche 1 bis 3,
wobei eine h-Komponente der freien Oberflächenenergie 0,4 mJ/m$^2$ oder mehr beträgt.

5. Verfahren gemäß einem der Ansprüche 1 bis 4,

wobei mindestens eine des Formpaars (112, 122) einen Matrizenkörper (143) umfasst, der einen vertieften Formeinsatzeinsetzabschnitt (142) und eine Vielzahl von geteilten Formeinsätzen (144) aufweist, die in dem Formeinsatzeinsetzabschnitt (142) eingesetzt ist, und in einem Zustand, in dem die Vielzahl von geteilten Formeinsätzen (144) in den Formeinsatzeinsetzabschnitt (142) eingesetzt ist, Oberflächen der Vielzahl von getrennten Formeinsätzen (144) die Formoberfläche (145) bilden, und eine Oberfläche von mindestens einem der getrennten Formeinsätze (144) eine implantierte Oberfläche ist, in die entweder eines oder beide von Fluor und Silicium implantiert ist.

6. Verfahren gemäß Anspruch 5,
   wobei in einem Zustand, in dem die Vielzahl von getrennten Formeinsätzen (144) in den Formeinsatzeinsetzabschnitt (142) eingesetzt ist, ein vertiefter Abschnitt (146) auf der Formoberfläche (145) durch die Vielzahl von getrennten Formeinsätzen (144) gebildet ist.

7. Verfahren gemäß einem der Ansprüche 1 bis 6,
   wobei die implantierte Oberfläche einen mit Fluor implantierten Chromnitridfilm umfasst.

8. Verfahren gemäß einem der Ansprüche 1 bis 7,
   wobei die implantierte Oberfläche in mindestens einem Umfangsabschnitt der Formoberfläche gebildet ist.

9. Verfahren gemäß einem der Ansprüche 1 bis 8,
   wobei ein Teil oder die gesamte Formoberfläche dekoriert ist.

10. Verfahren gemäß den Ansprüchen 1 bis 9,
    wobei in einem Teil oder der gesamten Formoberfläche die Vickers-Oberflächenhärte 750 HV oder mehr beträgt.

11. Verfahren gemäß einem der Ansprüche 1 bis 10,
    wobei das Verstärkungsfaserbasismaterial eine Kohlenstofffaser umfasst.

12. Verfahren gemäß einem der Ansprüche 1 bis 11,
    wobei die Harzzusammensetzung ein Epoxidharz umfasst.


**Revendications**

1. Procédé de fabrication d'un article moulé de matériau composite renforcé par fibres comprenant :

   moulage par pressage à chaud, en utilisant une matrice de moulage (130), un matériau composite renforcé par fibres comprenant un matériau à base de fibres de renforcement imprégné d'une composition de résine,
   dans lequel la matrice de moulage (130) comprend une paire de moules (112, 122) qui forment une cavité dans un état où les moules sont rapprochés l'un de l'autre et serrés, **caractérisé en ce que**
   une partie ou la totalité de la surface de moulage (113a, 123a) est une surface intégrée dans laquelle l'un ou les deux parmi fluor et silicium sont intégrés, et
   une énergie libre de surface de la partie ou de la totalité de la surface de moulage (113a, 123a) de la matrice de moulage (130) est 25,0 mJ/m$^2$ ou moins laquelle est mesurée par un procédé à trois liquides.

2. Procédé selon la revendication 1,
   dans lequel une somme d'un composant p et d'un composant h de l'énergie libre de surface est 3,0 mJ/m$^2$ ou moins.

3. Procédé selon la revendication 1 ou la revendication 2,
   dans lequel dans une partie ou la totalité de la surface de moulage (113a, 123a), un angle de contact avec l'eau est 100° ou plus, un angle de contact avec le diiodométhane est 75° ou plus, et un angle de contact avec l'éthylène glycol contact angle est 85° ou plus.

4. Procédé selon l'une quelconque des revendications 1 à 3,
   dans lequel un composant h de l'énergie libre de surface est 0,4 mJ/m$^2$ ou plus.

5. Procédé selon l'une quelconque des revendications 1 à 4,

   dans lequel au moins l'un de la paire de moules (112, 122) comprend un corps de matrice (143) qui possède un insert de moule-partie d'insertion (142) évidé et une pluralité d'inserts de moule à coins (144) qui est insérée dans l'insert de moule-partie d'insertion (142), et
   dans un état où la pluralité d'inserts de moule à coins (144) est insérée dans l'insert de moule-partie d'insertion (142), des surfaces de la pluralité d'inserts de moule à coins (144) forment la surface de moulage (145), et une surface d'au moins l'un des inserts de moule à coins (144) est une surface intégrée dans laquelle l'un ou les deux parmi fluor et silicium sont intégrés.

6. Procédé selon la revendication 5,
dans lequel dans un état où la pluralité d'inserts de moule à coins (144) est insérée dans l'insert de moule-partie d'insertion (142), une partie d'évidement (146) est formée sur la surface de moulage (145) par la pluralité d'inserts de moule à coins (144).

7. Procédé selon l'une quelconque des revendications 1 à 6,
dans lequel la surface intégrée comprend un film de nitrure de chrome intégrant du fluor.

8. Procédé selon l'une quelconque des revendications 1 à 7,
dans lequel la surface intégrée est formée dans au moins une partie périphérique de la surface de moulage.

9. Procédé selon l'une quelconque des revendications 1 à 8,
dans lequel une partie ou la totalité de la surface de moulage est décorée.

10. Procédé selon les revendications 1 à 9,
dans lequel dans une partie ou la totalité de la surface de moulage, la dureté de surface Vickers est 750 HV ou plus.

11. Procédé selon l'une quelconque des revendications 1 à 10,
dans lequel le matériau à base de fibres de renforcement comprend une fibre de carbone.

12. Procédé selon l'une quelconque des revendications 1 à 11, dans lequel la composition de résine comprend une résine époxy.

## FIG. 1

## FIG. 2A

## FIG. 2B

FIG. 3

FIG. 4A

FIG. 4B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002086483 A
- JP 3189347 B
- JP 2006033447 A
- US 4477707 A
- JP H08300361 A
- WO 2004048435 A

**Non-patent literature cited in the description**

- **KUROKOUCHI AKIO ; WADA KENTARO ; NISHIGUCHI AKIRA ; FUJIWARA SHINJI ; KONNO YOSHINORI**. Study on Improvement of Release Ability of Diamond-Like Carbon (DLC) Thin Films. *Saitama Industrial Technology Center Research Report*, 2006, vol. 4
- **RULISON CHRISTOPHER**. So you want to measure surface energy?. *Technical Note*, 1999, vol. 3306, 1-16
- **SUMIYA**. *Journal of the Adhesion Society of Japan*, 1982, vol. 18, 346
- **NAKAMAE**. *Japanese Journal of Polymer Science and Technology*, 1983, vol. 40, 65